# EUROPÄISCHE PATENTANMELDUNG

(11) **EP 0 619 146 A1**
(43) Veröffentlichungstag der Anmeldung: **12.10.1994**
(21) Anmeldenummer: 93105716.0
(22) Anmeldetag: 06.04.1993
(51) Int. Cl.: B05D 3/02, B05D 1/18, C09D 175/04

(54) **Verfahren zum Behäuten von Gegenständen, und behäutete Gegenstände**

(71) Anmelder: EMW-BETRIEBE EMMERLING & WEYL GmbH & CO. SCHAUMSTOFF KG, D-65582 Diez (DE)
(72) Erfinder: Drache, Frank, W-6251 Hahnstätten (DE); Andres, Werner, Dr., W-6250 Limburg 7 (DE); Jantzen, Frank, W-6253 Hadamar (DE)
(74) Vertreter: Blumbach, Kramer & Partner

(57) **Zusammenfassung**

Um bei einem Verfahren zum Behauten von Gegenständen mit einer Haut aus Kunststoff, insbesondere mit einem Kunststoff, der einen hohen Polyurethananteil aufweist, einem Verfahren zum Strukturieren derartiger Häute sowie bei derartig strukturierten Häuten und behauteten Gegenständen mit nur geringer Umweltbelastung eine wesentliche Oberflächenverbesserung und dadurch insbesondere auch eine Festigkeits- und/oder Haltbarkeitsverbesserung des behauteten Gegenstandes zu erreichen, ist bei dem Verfahren zum Behauten von Gegenständen erfindungsgemäß vorgesehen, daß der Gegenstand mit wenigstens einem in einem Lösungsmittel gelösten Polyurethanpolymer mit freien reaktiven Gruppen beschichtet wird und während, vorzugsweise auch nach dem Beschichten, eine chemische Reaktion, insbesondere eine Polymerisation des Polyurethanpolymers, in der auf den Gegenstand aufgebrachten Haut stattfindet.

## Beschreibung

Die Erfindung betrifft ein Verfahren zum Behauten von Gegenständen mit einer Haut aus Kunststoff, insbesondere mit einem Kunststoff, der einen hohen Polyurethananteil aufweist, ein Verfahren zum Strukturieren derartiger Häute sowie derart strukturierte Häute und behautete Gegenstände.

In der nicht vorveröffentlichten deutschen Patentanmeldung DE 42 06 964 wird ein Verfahren zum Beschichten von Gegenständen, insbesondere von Glashohlkörpern, mit einer Haut aus Kunststoff beschrieben, bei welchem der Gegenstand mit einem in einem Lösungsmittel gelösten Polyurethanpolymer auf Aromat- oder Aliphat-Basis beschichtet wird und die Schicht anschließend gegebenenfalls unter Wärmeeinwirkung aushärtet. Es wird als Lösungsmittel für das Polyurethanpolymer u.a. Aceton angegeben, ein Polymer mit freien reaktiven Gruppen wird jedoch nicht beschrieben.

Es existieren Lacke, in welchen Polyurethane in einem durch ein Lösungsmittel gelösten Kunststoff vorliegen und nach Verdampfen des Lösungsmittels in dem dadurch ausgehärteten Kunststoff eingebettet verbleiben. Derartige Lacke weisen Trocknungszeiten auf, die im Bereich von Tagen liegen, weshalb mit diesen Lacken beschichtete Gegenstände in der Regel erst nach wenigstens einem bis mehreren Tagen handhabbar sind. Ein weiteres Problem stellen die zumeist hochgiftigen Lösungsmittel dar, die in der Regel auch leicht entzündlich sind. Neben aufwendigen Personenschutzmaßnahmen und einer kostenintensiven Entsorgung sind zusätzlich Explosionsschutzmaßnahmen vorzunehmen.

Auf dem Bausektor ist es bekannt, Isocyanate mit Alkoholen zu mischen, um somit zu einem während einer Aufschäumung aushärtenden Polymer zu gelangen, das zur Abdichtung von Fugen verwendbar ist. Aufgrund der hohen Sprödigkeit und der geringen Verwitterungsbeständigkeit haben sich derartige Polyurethanpolymere für die Beschichtung von Gegenständen, insbesondere für die Beschichtung von Lebensmittelbehältern, als ungeeignet erwiesen.

Der Beschichtung von Lebensmittelbehältern, insbesondere von Glashohlkörpern, kommt jedoch aufgrund einer angestrebten oftmaligen Wiederverwendung eine erhöhte Bedeutung zu. Gerade Glas hat sich wegen seiner vielen Vorteile, insbesondere seiner chemischen Beständigkeit gegen die meisten Stoffe, seiner Oberflächenhärte und absoluten Dichtigkeit, auf vielen Gebieten bewährt. Nachteilig ist jedoch, daß Glas beim Einsatz für Hohlkörper bei starker mechanischer Beanspruchung seiner Oberfläche zur Rißbildung neigt. Unmerklich in die Oberfläche eingebrachte, sehr kleine Risse, die schon bei der Herstellung des Glashohlkörpers in der Preßform entstehen können, bilden bei Belastung Zentren für großflächige Risse und Brüche.

Zur Verbesserung der Festigkeit ist es bereits bekannt, Flaschen bei der Fertigung zunächst heiß im Bereich von etwa 500 bis 550°C mit z.B. einer Zinnchloridschicht als Haftverbesserer zu versehen und dann nach Abkühlung auf etwa 60 bis 70°C mit einer Polyethylenschicht zu besprühen. Die Polyethylenschicht erfüllt die gestellten Anforderungen nur ungenügend. Sie dient im wesentlichen nur als Transportsicherung für die Flaschen, schützt also die Flaschen vor Beschädigung nur zu Anfang ihrer Lebenszeit. Die Schicht ist leicht abwaschbar, so daß sie nach einigen Umläufen der Flaschen und heißem Waschen verschwindet. Hierbei wird auch das Waschwasser verunreinigt.

Der Erfindung liegt demgemäß die Aufgabe zugrunde, ein Verfahren zum Behauten von Gegenständen anzugeben, das bei nur geringem Aufwand und geringer Umweltbelastung eine wesentliche Oberflächenverbeserung und dadurch insbesondere auch eine Festigkeits- und/oder Haltbarkeitsverbesserung des behauteten Gegenstands zur Folge hat.

Die Lösung dieser Aufgabe ist im Anspruch 1 gekennzeichnet.

Da das in einem Lösungsmittel gelöste Polyurethanpolymer mit freien reaktiven Gruppen ausgestattet ist, kann während und vorzugsweise auch nach dem Beschichten eine chemische Reaktion, hier eine Polymerisation, stattfinden, die bereits nach kurzen Reaktionszeiten im Minutenbereich zu einer Verfestigung der aufgetragenen Haut führt und dadurch den behauteten Gegenstand schon kurze Zeit nach dem Schichtauftrag handhabbar werden läßt.

Anders als bei bekannten Lackprozessen führt das Verdunsten des Lösungsmittels nicht nur zu einem einfachen Aushärten des Kunststoffes, sondern die freien reaktiven Gruppen des gelösten Polyurethans gehen chemische Reaktionen ein und vernetzen die Polyurethane.

Durch Erhöhen der Temperatur, insbesondere durch Tempern des beschichteten Gegenstands in einem Ofen, können Aushärtezeiten in den Minutenbereich gebracht werden.

Vorteilhafte Ergebnisse wurden bei dünnen Behautungen mit einer Dicke von 1 bis 50 µm dadurch erreicht, daß der zu behautende Gegenstand auf eine Temperatur von 40 bis 60°C vorerwärmt wurde, das Beschichten durch Eintauchen des vorerwärmten Gegenstands über eine Zeit von 1 bis 2 Sekunden vorgenommen wurde, der beschichtete Gegenstand über eine Zeit von 10 bis 30 Sekunden trocknen lassen wurde und danach der Gegenstand mit der Beschichtung in einem Ofen bei einer Temperatur von 220°C über einen Zeitraum von etwa 3 Minuten ausgehärtet wurde. Die hierbei erhaltenen Schichten zeigten hohe Elastizität sowie hohe mechanische Belastbarkeit.

Als behautbare Gegenstände kommen anorganische Materialien, wie z.B. Glas, Glasuren aller Art, insbesondere Hohlglaskörper, Emaille, Fenster, optische Geräte, Keramiken in glasierter und unglasierter Form, Tone aller Art, Beton, Gasbeton, Zement aller Art, Mineralfasern aller Art, insbesondere Glaswolle und Steinwolle, sowie Metalle, insbesondere Reinmetalle oder Legierungen aller Art, in Frage.

Als organische Substrate haben sich Kunststoffe aller Art sowie Kunststoffasern, natürliche sowie synthetische Textilfasern, Holz sowie zu Gebrauchsgegenständen verarbeitetes Holz, Textilien und Papiere aller Art (auch Kartone) als geeignet erwiesen. In gleicher Weise zeigten technische Fasern, wie Graphit- und Kohlefasern aller Art, sowie Verbundstoffe ein für die Behautung geeignetes Verhalten.

Eine Einschränkung der Anwendung des erfindungsgemäßen Verfahrens auf verschiedene Substrate ist lediglich durch Substrattemperaturen oberhalb von 220°C gegeben, da oberhalb dieser Temperatur die Beschichtung aufgrund stattfindender Thermolyse nicht mehr stabil ist.

Um die Verwendung giftiger Substanzen und die dadurch bedingten Umweltbelastungen zu reduzieren, wurde versucht, auf als giftig gemäß Gefahrstoffverordnung klassifizierte Substanzen so weit wie möglich zu verzichten. Durch Beigabe von Acrylaten und/oder Polyolen sowie von Pyrrolidonen zu dem Polyurethan in Lösung wurde es ermöglicht, anteilig oder hauptsächlich Wasser als Lösungsmittel zu verwenden. In vorteilhafter Weise wurde dem gelösten Polyurethan Essigsäureethylester, Aceton und/oder Methyl-ethyl-keton als Lösungsmittel beigegeben und somit die übliche Verwendung von Toluol und DMF als Lösungsmittel für Polyurethane vermieden. Aceton und Methyl-ethyl-keton sind gemäß Gefahrstoff-verordnung nicht als giftig zu deklarieren, sondern es ist statt dessen nur auf ihre Leichtentzündlichkeit hinzuweisen. Bei derartigen, in Lösung vorliegenden Polyurethanen können organische Lösungsmittel je nach Anwendung teilweise oder vollständig entfallen und mit diesen die Beeinträchtigung der Gesundheit der betroffenen Personen. Das Arbeiten mit Atemschutzmaske ist nicht mehr erforderlich, Explosionsschutzmaßnahmen elektrischer Schaltanlagen werden hinfällig, und die Lagerung ist unproblematisch.

Die vorstehend beschriebenen Eigenschaften der Behautung konnten durch Zugabe spezieller Additive noch weiter verbessert werden. Als Additiv zur Einstellung der Flammwidrigkeit wurden dem gelösten Polyurethanpolymer Hydroxistanate, Antimontrioxid und/oder Antimonpentoxid und/oder Ammoniumpolyphosphate sowie Polyhalogendiphenyloxid beigegeben. Durch Verwendung dieser Flammhemmer war es möglich, die in der DIN 4102 geforderten Werte für Flammwidrigkeit einzuhalten und darüber hinaus die Verwendung bekannter Flammschutzmittel auf der Basis von Polybromdiphenylethern bzw. Polyhalogendiphenyloxiden zu vermeiden. Da sich bei der Zersetzung der bekannten Polybromidphenylethern in Kombination mit Antimontrioxid toxische und zur Zerstörung der Ozonschicht beitragende Stoffe bilden, darüber hinaus als weitere Thermolyse- und Pyrolyseprodukte allgemein als potentiell krebserregend eingestufte, organische Halogenverbindungen einstellen und die Gefahr der Bildung bromanaloger Dioxinverbindungen besteht, wird durch die Vermeidung dieser Substanzen die Recyclebarkeit erfindungsgemäß beschichteter Gegenstände wesentlich verbessert. Selbst eine Verbrennung der Behautung, die oberhalb von 560°C von selbst einsetzt, führt beim Einschmelzen z.B. von Glashohlkörpern zu keiner merklichen Umweltbelastung.

Soweit die hier beschriebenen Additive wasserunlöslich sind, können diese durch den Zusatz von Emulgatoren, wie Seifen, Tensiden oder Lecithinen, auch in erfindungsgemäßen Mischungen mit Wasser als Lösungsmittel gelöst werden.

Als Additiv zur Konservierung der Behautung wurden dem gelösten Polyurethan Chloracetamid, Methylisothiazolone, Benzalkoniumchloride, Bromnitropropandiol, Phenylphenole und/oder Pyridinthiosalze beigegeben. Mit diesen Additiven konnte ein vorzeitiger biologischer Abbau verhindert werden. Der Giftigkeit der vorstehenden Substanzen wurde zum Teil dadurch Rechnung getragen, daß sie in äußerst geringen Mengen beigegeben wurden. Auch die Beigabe von Benzimidazolen, Thiazolonen, Tributylzinn, Tributylzinnester und/oder Kresolen wirkte bereits in geringen Mengen fungizid und bakterizid.

Als besonders vorteilhaft erwies sich die Beigabe von Silanen zu dem gelösten Polyurethanpolymer, insbesondere die Beigabe von Lactam- und Aminosilanen mit quartären Stickstoffatomen, da diese zum einen eine fungizide und bakterizide Wirkung zeigten und zum anderen bei anorganischen Gegenständen stark haftungsverbessernd wirkten. Aufgrund des quartären Ammoniumsalzes dieser Silane in der Behautung sterben an der Oberfläche der Behautung anhaftende Pilze oder Bakterien ab, ohne daß nach deren Entfernung die Behautung einer Änderung unterliegt. Die sich hieraus ergebenden Vorteile und Anwendungen sind u.a. bei neuartigen Filtern und Reinräumen nutzbar.

Für die Behautung unpolarer Polymere, insbesondere für die Behautung von Polyethylenen, hat sich als Primer Toluol oder eine Mischung im Mischungsverhältnis von 1:1 aus zwei Anteilen aus der aus Toluol, Methyl-ethyl-keton, Tetrahydrofuran und Isopropanol bestehenden Gruppe bewährt. Mit einem Auftrag derartiger Substanzen auf den Gegenstand vor der Beschichtung konnte die Haftung der späteren Haut verbessert werden. Hierbei kommt es zu einer leichten Anlösung der Oberfläche des unpolaren Polymers, ohne jedoch dabei dessen Oberflächenstruktur zu stören oder zu zerstören.

Eine weitere Verbesserung der Haftung wurde mit Additiven, wie PUR-Klebstoffen, Acrylatklebern und/oder Styroporklebstoffen, erreicht. Die Festigkeit der späteren Haut konnte durch die Beigabe von Acrylaten, Polyamiden, Polycarbonaten und/oder Acrylnitrilen zu dem gelösten Polymer erhöht werden.

In vorteilhafter Weise konnten Additive zur Erhöhung der Verwitterungsstabilität, wie z.B. Hydroximethylphenole, beigegeben werden.

Die Hinzufügung von Graphit beeinflußt die Leitfähigkeit der späteren Haut und somit deren statisches Aufladungsverhalten. In gleicher Weise konnten handelsübliche Antistatikmittel, wie z.B. Sandin EU oder Irgastat 110 der Sandoz, Basel, Schweiz, verwendet werden. Die UV-Stabilität der späteren Haut wurde durch die Beigabe von Benzophenonen und/oder Benzotriazolen zu dem gelösten Polyurethan erhöht. Darüber hinaus zeigte sich auch die vorteilhafte Verwendbarkeit handelsüblicher UV-Stabilisatoren. Die Mattigkeit oder der Glanzeffekt der späteren Haut wurde durch Hinzufügen von Rutil (TiO₂) und/oder Glimmerplättchen in erwünschter Weise beeinflußt. Hierdurch wurde es möglich, von hochglänzenden bis zu opaken Oberflächen die gewünschte Mattigkeiten einzustellen. Es ist ebenfalls möglich, eine bisher nur durch Ätzverfahren in hochgradig aggressiven Säuren, durch Sandstrahlen oder durch Lasermattierungsverfahren erhaltene Oberflächenrauhigkeit auf einfache Weise zu erzeugen.

In besonders vorteilhafter Weise konnten Additive zur Farbgebung und/oder zum Lichtschutz, wie z.B. organische Farbstoffe und Pigmente, beigegeben werden. Aufgrund der günstigen Löslichkeit derartiger organischer Farbstoffe und Pigmente können bereits in äußerst dünnen Schichten, d.h. in Schichten mit einer Dicke von 20 bis 50 µm, Absorptionswerte erhalten werden, welche die Absorptionswerte üblicher gefärbter Gläser deutlich übersteigen.

Bisher bestand bei der Glaseinfärbung von Hohlkörpern, insbesondere von Glasflaschen, ein Problem darin, die gleichbleibende Flaschenfärbung im Chargenbetrieb zu gewährleisten. Hierzu wurden sogenannte Glasmacherseifen eingesetzt, die jedoch das Problem der inhomogenen Färbung nicht vollständig beseitigen können. Die erfindungsgemäßen Behautungen weisen dementgegen eine hohe Homogenität der Einfärbung auf, und es können die üblicherweise zur Färbung eingesetzten Farbstoffe, Chromoxide zur Grünfärbung, Kobaltoxid zur Blaufärbung, die als kanzerogen eingestuft werden, vermieden werden.

Durch den Einsatz ungefärbter Gläser, die erst durch Behautung ihre erwünschten Absorptionseigenschaften erhalten, kann eine nach Farben getrennte Wiederverwertung vermieden werden. Da sich die verwendeten organischen Farbstoffe und/oder Pigmente bereits bei Temperaturen unterhalb der Glasschmelztemperatur in im wesentlichen nicht giftige Bestandteile zersetzen und gleiches auch für die Behautung gilt, führt das Einschmelzen verschiedenfarbig behauteter Gläser wieder zu einer ungefärbten, nahezu nicht verunreingiten Glasschmelze. Hierdurch wird nicht nur die wirtschaftliche Wiederverwertung deutlich verbessert, auch der Austritt kanzerogener Farbstoffe aus der erhitzten Schmelze findet nicht statt.

Mit gutem Ergebnis wurden dem gelöstem Polyurethanpolymer ebenfalls Farbstoffe mit Perlglanzeffekt, fluoreszierende Farbstoffe und/oder Lebensmittelfarbstoffe beigegeben.

Bei der Behautung von Schaumstoffen verbesserte der Einsatz von Methylethylketon und/oder Tetrahydrofuran die Haftung der späteren Behautung und erzeugte einen Schrumpfeffekt an der Substratoberfläche, der auch zur Strukturierung der Oberfläche, insbesondere zur Erhöhung deren Griffigkeit, nutzbar ist.

Insgesamt hat sich bei der Behautung eine Zusammensetzung bewährt, bei welcher vor der Beschichtung

| | |
|---|---|
| der gelöste Polyurethanpolymeranteil | bis zu 30 Masse-%, |
| der Wasseranteil | bis zu 10 Masse-%, |
| der Anteil niedrigsiedender, halogenfreier polarer organischer Lösungsmittel, wie z.B. Aceton, | bis zu 50 Masse-%, |
| der Anteil an Farbstoffen und/oder Pigmenten, wie beispielsweise an Zapon-Farbstoffen | bis 3 %, |
| wobei auch größere Mengen möglich sind, | |
| der Anteil an Flammhemmern, vorzugsweise Hydroxistannaten | vorzugsweise 4 %, maximal 30 %, |
| der Anteil an Glanzbildnern | vorzugsweise 2 % bis maximal 30 %, |
| der Anteil an Antioxidans, z.B. Irganox^{R} der Ciba-Geigy AG, | vorzugsweise 4 % bis maximal 30 %, |
| der Anteil an UV-Stabilisatoren, z.B. Tinuvin^{R} der Ciba-Geigy AG, | vorzugsweise 4 % bis maximal 5 % |

beträgt.
Hierbei werden unter niedrigsiedenden Lösungsmitteln diejenigen Lösungsmittel verstanden, deren Siedepunkt unter 80°C liegt.

In überraschend einfacher Weise zeigte sich eine weitere Strukturierungsmöglichkeit der erfindungsgemäßen Behautungen. Bereits das kurzzeitige Eintauchen eines behauteten Körpers während oder nach dem Auftragen des gelösten Polyurethanpolymers in eine nukleophile Substanz sorgte für lokalen Abbruch der Polymerisierungsreaktion und erzeugte dadurch Häute mit Poren, d.h. permeable Membranen. Wird während des Beschichtens, z.B. bei dem Beschichten durch Besprühen des Gegenstandes mit dem gelösten Polyurethanpolymer und gleichzeitiger Zugabe einer nukleophilen Substanz das vollständige Auspolymerisieren des Polyurethans verhindert, zeigen die dadurch hergestellten Behautungen einen steuerbaren Membrancharakter. Selbst beim einfachen Eintauchen des frischbeschichteten Gegenstandes in Wasser zeigte sich in überraschender Weise, daß sich trotz der homogenen Benetzung lokale, d.h. inhomogene, Durchgangsöffnungen gebildet hatten. Messungen der Durchlässigkeit der Haut, insbesondere Strömungsdruckmessungen, wiesen nach, daß je nach Einwirkungsintensität der nukleophilen Substanz offenporige bis hermetisch dichte Schichten erzeugt werden können. Darüber hinaus ist es möglich, Behautungen zu erzeugen, die zwar Gase und Dampf durchlassen, aber ansonsten flüssigkeitsdicht sind.

Mit derartigen Membranen beschichtete Mikroporfilter konnten in Bezug auf ihre Filterwirkung verbessert werden.

Durch die Entnahme der strukturierten Haut von dem Gegenstand, insbesondere durch das Abziehen der strukturierten Haut nach ihrem wenigstens teilweisen Verfestigen, wird die Membran unabhängig von dem zuvor behauteten Gegenstand handhabbar. Durch mehrlagigen Auftrag mehrerer strukturierter Häute sind die mechanischen Eigenschaften, insbesondere die Stabilität und Tragfähigkeit, der so erhaltenen mehrlagigen Haut zu verbessern und Schichtstrukturen mit gewünschten Eigenschaften und Filterwirkungen herstellbar.

Besondere Vorteile zeigte die Behautung ausgewählter Gegenstände. So konnte durch eine mit organischen Farbstoffen gefärbte Behautung von Lebensmittelbehältern durch Absorption der UV-Anteile und der Anteile im blauen Spektralbereich die Haltbarkeit und Qualität der darin verpackten Lebensmittel verbessert werden.

Auch die Behautung von Baukörpern zeigte überraschende Vorteile. Als Baukörper werden im Sinne dieser Beschreibung sowohl Gebäude, Teile von Gebäuden als auch Bauelemente verstanden. Durch eine geänderte Auftragstechnik, d.h. durch Bestreichen oder Besprühen, konnte bei Raumtemperatur, etwa 20°C, und 30 bis 70 % relativer Luftfeuchte, vorzugsweise 50 % relativer Luftfeuchte, innerhalb von 24 Stunden eine vollständige Ausreaktion und Trocknung erreicht werden, wobei nach etwa 10 Minuten die Behautung handhabbar war.

Auf diese Weise ließen sich nach DIN 4102 flammwidrige Behautungen erzeugen. Die Verwendung anstelle von Bitumen bei der Beschichtung von Flachdächern zeigte sich als deutlich kostengünstiger, ermöglichte feuchtedichte und dennoch atmungsaktive Behautungen bei weitaus geringeren Trocknungszeiten, als es für Bitumen nötig ist. Derzeit wird von einer Lebensdauer der Behautung von 5 Jahren gegenüber einer mittleren Lebensdauer von 2 bis 3 Jahren eines Bitumenauftrags ausgegangen. Bei der Gebäudefundament-Behautung konnte Bitumen durch flüssigkeits- und dampfdichte Behautungen ersetzt werden. Die erfindungsgemäße Behautung kann auch auf Bitumen oder Dachpappe aufgetragen werden. Dabei kann auf das zusätzliche Aufbringen von Sand/Kies als Witterungsschutz verzichtet werden. Vorstellbar ist auch das Aufbringen von mit der erfindungsgemäßen Behautung beschichteten bzw. imprägnierten Vliesstoffen auf Flachdächer oder sonstige Substrate. Allgemein wird durch die Verwendung derartiger "Verbundbehautungen" eine größere Rißstabilität bei mechanischer Beanspruchung gewährleistet. Derartige erfindungsgemäße Vlies-Behautungen sind ebenfalls wasserdampfdurchlässig, atmungsaktiv, hydrophob, offenporig bzw. geschlossenporig einstellbar.

Die bei der Verarbeitung von Bitumen nachteiligen Reinigungsprozesse entfallen, da sich die Behautung von den Arbeitsgeräten nach ihrem Verfestigen in einfacher Weise abziehen läßt.

Bei der Gebäudesanierung haben sich erfindungsgemäße Behautungen bei der Beschichtung von Mineralfaserplatten, insbesondere von Asbestplatten, bewährt. Hierbei kann das Austreten karzinogener Feinstäube verhindert werden.

Bei der Gebäudesanierung, insbesondere im Feuchtraumbereich, wie z.B. in Kellergewölben, leisten erfindungsgemäße Behautungen Dienste bei der Versiegelung von Oberflächen und Schutz vor eindringender Feuchtigkeit sowie Bakterien- oder Pilzbefall.

Durch bakterizide und fungizide Additive lassen sich medizinische und/oder biologische Reinraumbereiche herstellen, deren Neigung zur Keimbildung stark vermindert ist.Als weitere Einsatzgebiete erscheinen Schwimmbadbeschichtungen sowie die Beschichtung von Abzugsschächten und Lüftungskanälen als vorteilhaft.

Werden das Granulat, die Wand oder ein Teil eines Filters, der von einem zu reinigenden Medium angeströmt oder durchströmt wird, beschichtet, so können z.B. in Wasserfilterpatronen Folien mit Silbersalzen und mit anderen Schwermetallsalzen imprägnierte Wasserfilter substituiert werden, die üblicherweise nach Gebrauch als schwermetallhaltiger Abfall auf Deponien zu entsorgen sind. Einfaches Verbrennen ermöglicht die rückstandslose Entsorgung der desinfizierend wirkenden Behautung.

Durch die erreichbare hohe Schlagzähigkeit konnte bei der Behautung von metallischen Gegenständen ein Lackauftrag von bis zu sieben Schichten ersetzt werden. So konnten z.B. Garagentore oder KFZ-Aluminiumfelgen durch den Auftrag einer Behautung wirksam gegen Korrosion und mechanische Beschädigung geschützt werden.

Bei der Beschichtung von Metallkabeln, insbesondere von Kupferkabeln, konnte gezeigt werden, daß beim Stromtransport durch Überlandleitungen ein ca. 15 % geringerer Energieverlust gegenüber unbeschichteten Kabeln auftritt.

Die Beschichtung textiler Gegenstände, insbesondere von Sportbekleidung oder Schuhwerk, schaffte dampfdurchlässige, aber dennoch feuchtigkeitsdichte Bekleidung. Die Beschichtung von Arbeitsbekleidung erhöhte sowohl den thermischen als auch den elektrischen Schutz neben einer verbesserten Abriebfestigkeit. Die Beschichtung von Papier oder Karton verbessert die Haltbarkeit des äußerst preiswerten Trägermaterials und ermöglicht deren Verwendung als witterungsfestes Transparentmaterial.

Die Erfindung wird nachstehend anhand der beigefügten Figuren im einzelnen beschrieben. Es zeigen:
- Fig. 1: das Transmissionsspektrum einer handelsüblichen, farblosen 330 ml Bier-Glasflasche, die mit einer einen organischen Farbstoff enthaltenden Behautung in erfindungsgemäßer Weise überzogen wurde,
- Fig. 2: das Transmissionsspektrum einer handelsüblichen, grüngefärbten 330 ml-Bier-Glasflasche,
- Fig. 3: das Transmissionsspektrum einer handelsüblichen, ungefärbten 330 ml-Bier-Glasflasche.

Die Beschichtung mit einer hochdehnbaren, elastischen Behautung, die je nach Verfahrensablauf offenporig, spröde, atmungsaktiv, wasserdampf-durchlässig oder geschlossenporig, glatt und/oder wasserundurchlässig sein kann, wird nachfolgend anhand von Ausführungsbeispielen beschrieben.

Werden im Handel befindliche Hohlglaskörper, insbesondere Glasflaschen, vergütet, so stehen standardmäßig heiß- oder kaltendvergütete Flaschen zur Verfügung. Um eine ausreichende Haftung auf der Oberfläche derartiger Hohlglaskörper zu erreichen, sind idealerweise die Vergütungen vorher zu entfernen.

Durch einen einfachen Waschprozeß in Waschlauge (ca. 5%ige alkalische (ca. pH 9) Tensidlösung) oder durch eine ca. zweistündige thermische Behandlung bei ca. 150°C kann die Kaltendvergütung quantitativ entfernt werden.

Ohne die Entfernung der Kaltendvergütung ist zum Zwecke der Haftungsverbesserung zunächst ein Primer, wie er für unpolare Polymere bereits beschrieben wurde, aufzutragen.

Die organische Heißendvergütung mit Stearaten und Palminaten kann durch ca. zehnstündiges Tempern der Flaschen bei ca. 500 bis 550°C quantitativ eliminiert werden. Die Beigabe von Silanen zum gelösten Polyurethan erhöht dann die Haftung wesentlich. Die Auftragung des Silans kann auch als Primer erfolgen, d.h. die Flaschen (mit oder ohne Heißendvergütung) werden zuvor in eine Silanlösung (ca. 40 % Silan, gelöst in ca. 60 % Alkohol) eingetaucht und nach kurzem Antrocknen in die erfindungsgemäße Behautungsmischung getaucht. Diese Methode empfiehlt sich z.B. bei metallisiertem Glas (Wärmeschutzgläser, optisch vergütete Gläser usw.).

Die erfindungsgemäßen Behautungen können ebenfalls auf Kunststoffhohlbehälter (z.B. PTFE-, PE-Flaschen) aufgebracht werden. Hierzu finden die Behautungen für unpolare Kunststoffe Anwendung. Hinsichtlich des UV- und Lichtschutzes gilt das gleiche wie für die Glasbeschichtung.

Anorganische Heißendvergütungen können durch ca. 24-stündiges Tempern der Flaschen bei 550°C quantitativ entfernt werden. Die anschließende Haftung der Behautung auf der Glasoberfläche kann durch einfaches Zumischen von Silanen aller Art zum gelösten Polyurethanpolymer verbessert werden.

Alternativ können vorwiegend anorganische Heißendvergütungen durch vierstündige Behandlung in ca. 30%iger Schwefelsäure, allgemein in Mineralsäuren, entfernt werden. Wasserstoffperoxid ist hierzu ebenfalls verwendbar.

Ohne Entfernung der Heißendvergütung ist durch die Verwendung von Aminosilanen und dazu vergleichbaren offenkettigen und geschlossenkettigen Analoga und Derivaten die Haftung der späteren Behautung wesentlich zu verbessern.

Vor der Beschichtung werden die Flaschen auf ca. 40 bis 60°C vorgetempert. Die so vorbehandelten Flaschen werden in dem gelösten Polyurethanpolymer mit freien reaktiven Gruppen und den jeweiligen Additiven kurz eingetaucht, d.h. für ca. 1 bis 2 Sekunden, so daß zumindest die äußere Oberfläche der Flasche vollständig benetzt ist. Nach dem Entnehmen aus der Lösung wird die aufgetragene Schicht an der Umgebungsluft bei etwa Raumtemperatur kurz antrocknen lassen, d.h. für ca. 10 bis 30 Sekunden an der Umgebungsluft gehalten. Überschüssiger Schichtauftrag läßt sich durch Abtropfen oder mechanische Berührung der Beschichtung mit einem Faden in die Lösung zurückbringen. Danach wird die Beschichtung in einem Ofen bei einer Flaschentemperatur von ca. 220°C für ca. 3 Minuten thermisch verfestigt bzw. ausgehärtet.

Die bei Anwendungen in der Getränkeindustrie geforderte erhöhte Laugenresistenz war durch die Beigabe der Lactam-silane nicht nur einzuhalten, sondern deutlich zu überbieten. Die geforderte 20-minütige Laugenresistenz in einer wäßrigen 2%igen, 80°C heißen Natronlauge mit maximal 5 % Tensidzusatz wurde in allen Fällen deutlich überschritten. Die Laugenresistenz der Beschichtung ohne die Zugabe von Silanen betrug 30 bis 40 Minuten, mit Zugabe der Silane wurden Zeiten von bis zu 3 Stunden erreicht.

Die Beigabe von Acrylatzusätzen erhöhte die Festigkeit, was empirisch anhand der Messung von Abriebfestigkeiten zweier gegeneinander in mechanischen Kontakt gebrachten, beschichteten Substrate bestimmt wurde. Im Line-Simulatortest, bei dem gezielt mit Wasser gefüllte Hohlglaskörper in Reib- und Stoßkontakt gebracht wurden, zeigten diese neuen Behautungen nach 20 Minuten Testzeit gegenüber Behautungen ohne Acrylatzusatz eine deutlich geringere Behautungsabnutzung.

Durch die Kombination von Farbstoffen, Pigmenten und UV-Stabilisatoren konnte ein verbesserter Licht- und UV-Schutz sowohl für die Haut als auch für die darunter befindlichen Substrate erreicht werden.

Als Farbstoffe und Pigmente haben sich Zapon-Farbstoffe bewährt. Vorzugweise wurden als Flammhemmer Hydroxistannat, als Glanzbildner Rutil, als Antioxidans "Irganox" (Hersteller: Ciba-Geigy AG) und als UV-Stabilisator "Tinuvin" (Hersteller: Ciba-Geigy AG) verwendet.

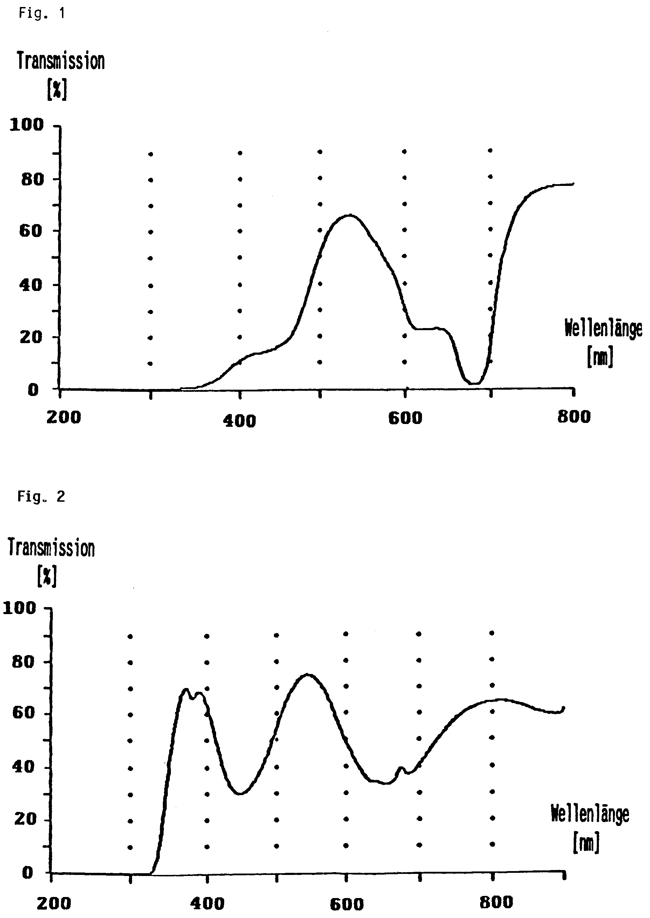

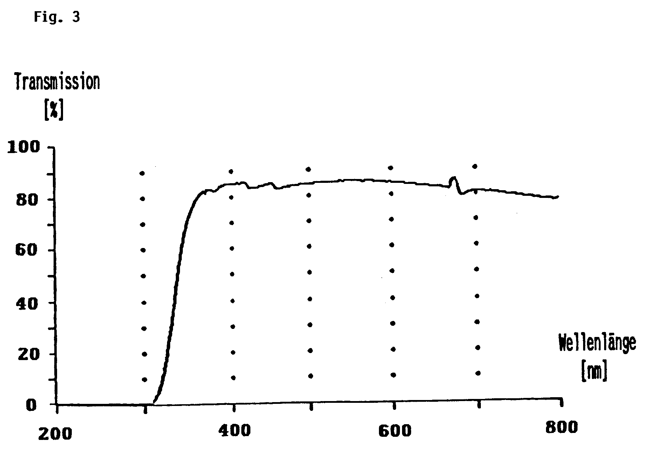

Nach der Behautung konnte bei einer Flasche, die ursprünglich das in Fig. 3 dargestellte Transmissionsspektrum aufwies, das in Fig. 1 gezeigte Transmissionsspektrum erzielt werden. Gegenüber herkömmlichen, grüngefärbten Bier-Glasflaschen ist im Bereich von 300 bis 450 nm eine deutlich erniedrigte Transmission zu erreichen. Die sehr homogene Einfärbung wurde bereits mit Schichtdicken von 20 bis 50 µm erreicht und übertraf die ca. 3 mm dicke, gefärbte Glasmatrix der herkömmlichen Flaschen. Der insbesondere für die Getränkeinhaltsstoffe wichtige spektrale Bereich von 350 bis 450 nm wurde in der Transmission gesenkt, so daß der photochemische Abbau von Aroma-, Geschmacks-, Eiweißstoffen und dergleichen stark minimiert wurde.

Die hier in der Gegenüberstellung einer mit Chromoxidgrün eingefärbten Glasflasche erhaltenen Werte lassen sich in analoger Weise auch auf herkömmliche blau, braun, rot oder in sonstiger Weise gefärbten Glashohlkörper übertragen.

Bei den vorstehend diskutierten Messungen wurde die Reflektivität und die Streuung an hochglänzenden sowie an matten Glasoberflächen nicht mit berücksichtigt; es wird jedoch erwartet, daß an hochglänzenden Oberflächen und an stark mattierten Oberflächen der rückgestreute Lichtanteil höher als bei herkömmlichen heiß- oder kaltendvergüteten Glaskörpern ist und dadurch eine weitere Verbesserung der Transmissionseigenschaften erreicht wird.

Die in diesem sowie in den weiteren Bespielen verwendete Grundrezeptur setzte sich wie folgt zusammen:

| | |
|---|---|
| Polyurethan | bis zu 30 Masse-%, |
| Wasser | bis zu 10 Masse-%, |
| niedrigsiedende, halogenfreie, polare, organische Lösungsmittel, wie z.B. Aceton | bis zu 50 Masse-%, |
| Farbstoffe, Pigmente | bis maximal 3 %, |
| Flammhemmer | bis maximal 5 %, |
| Glanzbildner | bis maximal 3 %. |

Hiervon unabhängig konnte anwendungsspezifisch der Anteil zugegebener Additive höher oder auch deutlich niedriger liegen.

Generell zeigte sich, daß zur Beschichtung von Gegenständen, einschließlich der von Hohlglaskörpern, neben der Tauchtechnik auch das Aufspritzen oder Aufrollen der Lösung gute Resultate ergab.

In einem zweiten Ausführungsbeispiel wurden polare Heteroatompolymere, insbesondere PUR-Schaumstoffe, behautet. Bei einer Verarbeitungstemperatur von 18 bis 30°C und einer Umgebungsluftfeuchte im Bereich von 40 bis 70 % wurden staub- und fettfreie Substrate mit einer Spritzpistole beschichtet. Die erfindungsgemäße Polymermischung wurde aus ca. 30 cm Abstand zum Substrat bei einem Spritzdruck von 5 bis 7 bar und einem Zerstäubungswinkel von < 30° mit einer Spritzpistole vom Typ Walther Pilot 3F mit vier Löchern und 1,5 mm Düsendurchmesser aufgetragen. Auf die erhaltene, noch feuchte, beschichtete Oberfläche konnte nach Bedarf ein mehrschichtiger Auftrag durch aufeinanderfolgendes, mehrlagiges Beschichten aufgebaut werden. Durch Besprühen der noch lösemittelfeuchten Oberfläche mit Wasser, vorzugsweise in der geschilderten Weise mit der beschriebenen Spritzpistole, oder durch Eintauchen des Substrates nach dem Sprayprozeß in Wasser entstanden offenporige Oberflächenstrukturen, die atmungsaktiv und wasserdampfdurchlässig waren, jedoch undurchlässig für die flüssige kondensierte Phase waren.

Beim Stehenlassen an der Umgebungsluft bei Raumtemperatur und relativer Luftfeuchte von 30 bis 70 % entstanden nach 24 Stunden Gesamttrocknungszeit ohne die zusätzliche Aufbringung von Wasser geschlossenporige Oberflächen.

Bei 20°C und 50 % relativer Luftfeuchte erfolgte innerhalb von ca. 24 Stunden eine vollständige Ausreaktion und Trocknung, dennoch war bereits nach ca. 10 Minuten das Material handhabbar.

Durch Zugabe von Methyl-ethyl-keton oder größerer Mengen Tetrahydrofuran zur Polymerlösung wurden in der Oberfläche der Schaumstoffe Schrumpfungsprozesse durch Anlösung erzielt. Auf diese Weise konnte die Haftung der späteren Behautung erhöht werden.

Bei einem dritten Ausführungsbeispiel wurden metallische Oberflächen, insbesondere Metallkabel, beschichtet. Das Kabel wurde zunächst mit offener Flamme gereinigt und das gereinigte Kabel danach auf ca. 60°C erwärmt. Die Polyurethanlösung wurde durch das vorstehend beschriebene Aufspritzen mit einer Spritzpistole aufgetragen und an der Umgebungsluft für 10 bis 30 Sekunden antrocknen lassen. Danach wurde die Behautung bis zur vollständigen Ausreaktion und zur vollständigen Kratzfestigkeit bei erhöhten Temperaturen getempert.

Nach diesem Vorgang konnte das Kabel direkt auf eine Trommel aufgerollt werden, und es konnte durch Messungen nachgewiesen werden, daß beim Stromtransport durch Überlandleitungen ein ca. 15 % geringerer Energieverlust gegenüber unbeschichteten Kabeln erreicht wurde.

Allgemein können Metalle nach vorheriger Reinigung und Entfettung durch Auftrag der Polyurethanlösung mittels Spritzen, Tauchen, Rollen oder Rakeln beschichtet werden. Derart beschichtete Autofelgen zeigten hohe Korrosions- und Witterungsbeständigkeit, wiesen glatte und glänzende Oberflächen auf, und es konnte das Auftragen von bis zu sieben Grundierungs- und Lackschichten durch den Auftrag einer einzigen, erfindungsgemäßen Behautung unter wahlweiser Zumischung von Additiven, wie Pigmenten und Perlglanz-Glimmerplättchen, ersetzt werden.

Bei einem dritten Ausführungsbeispiel konnten Mineralfasern und Beton durch direkten Auftrag der Polyurethanlösung durch Spritz-, Tauch-, Roll- oder Rakeltechnik behautet werden.

Durch die Behautung von Mineralfasern wurde das Austreten von Feinstpartikeln vermieden. Die potentiell kanzerogenen Wirkungen der Inhalation von Partikeln mit Größen < 5 µm konnten so nachhaltig unterbunden werden. Die Eigenschaften wurden in Bezug auf Wärme- oder Schalldämmung sowie in Bezug auf die Flammwidrigkeit nicht verschlechtert.

Bei der Beschichtung von Beton, Gasbetonsteinen oder sonstigen Steinen zum Wohnungsbau waren Trocknungszeiten im Bereich von einer Stunde zu beachten und herkömmliche Wartezeiten von mehr als 24 Stunden, wie sie bei der Verwendung von Bitumen üblich sind, wurden vermieden.

Erfindungsgemäß beschichtete Garagentore sowie Aluminiumfensterrahmen zeigten die vorstehend beschriebenen Vorteile im Hinblick auf Witterungsbeständigkeit und Beständigkeit gegenüber mechanischer Beanspruchung.

## Patentansprüche

1. Verfahren zum Behauten von Gegenständen mit einer Haut aus Kunststoff, insbesondere mit einem Kunststoff, der einen hohen Polyurethananteil aufweist,
dadurch gekennzeichnet,
daß der Gegenstand mit wenigstens einem in einem Lösungsmittel gelösten Polyurethanpolymer mit freien reaktiven Gruppen beschichtet wird und während, und vorzugsweise auch nach dem Beschichten eine chemische Reaktion, insbesondere eine Polymerisation des Polyurethanpolymers, in der auf den Gegenstand aufgebrachten Haut stattfindet.

2. Verfahren zum Behauten von Gegenständen nach Anspruch 1,
dadurch gekennzeichnet,
daß der zu behautende Gegenstand auf eine Temperatur oberhalb Raumtemperatur vorerwärmt wird, das Beschichten durch Eintauchen des vorerwärmten Gegenstandes in dem gelösten Polyurethanpolymer vorgenommen wird, der beschichtete Gegenstand kurz Antrocknen lassen wird und danach die Beschichtung in einem Ofen bei einer Temperatur oberhalb der Raumtemperatur ausgehärtet wird.

3. Verfahren zum Behauten von Gegenständen nach Anspruch 1 oder 2, dadurch gekennzeichnet,
daß der zu behautende Gegenstand auf eine Temperatur von 40 bis 60°C vorerwärmt wird, das Beschichten durch Eintauchen des vorerwärmten Gegenstandes über eine Zeit von 1 bis 2 Sekunden vorgenommen wird, der beschichtete Gegenstand über eine Zeit von 10 bis 30 Sekunden Antrocknen lassen wird und danach die Beschichtung in einem Ofen bei einer Temperatur von 220°C über einen Zeitraum von etwa 3 Minuten ausgehärtet wird.

4. Verfahren zum Behauten von Gegenständen nach einem der vorstehenden Ansprüche,
dadurch gekennzeichnet,
daß dem gelösten Polyurethan Acrylate und/oder Polyole und/oder Pyrrolidone beigeben werden und als anteiliges oder hauptsächliches Lösungsmittel Wasser verwendet wird.

5. Verfahren zum Behauten von Gegenständen nach einem der vorstehenden Ansprüche,
dadurch gekennzeichnet,
daß dem gelösten Polyurethan Essigsäureethylester, Aceton und Methylethly-keton als Lösungsmittel beigegeben werden.

6. Verfahren zum Behauten von Gegenständen nach einem der vorstehenden Ansprüche,
dadurch gekennzeichnet,
daß als Additive zur Einstellung der Flammwidrigkeit dem gelösten Polyurethanpolymer Hydroxistannate, Antimontrioxid und/oder Antimonpentoxid und/oder Ammoniumpolyphosphate und/oder Zinkborate beigegeben werden.

7. Verfahren zum Behauten von Gegenständen nach einem der vorstehenden Ansprüche,
dadurch gekennzeichnet,
daß als Additiv zur Konservierung dem gelösten Polyurethan Chloracetamid, Methylisothiazolone, Benzalkoniumchloride, Bromnitropropandiol, Phenylphenole und/oder Pyridinthiolsalze beigegeben werden.

8. Verfahren zum Behauten von Gegenständen nach einem der vorstehenden Ansprüche,
dadurch gekennzeichnet,
daß als fungizide und bakterizide Additive dem gelösten Polyurethan Benzimidazole, Thiazolone, Tributylzinn, Tributylzinnester und/oder Kresole beigegeben werden.

9. Verfahren zum Behauten von Gegenständen nach einem der vorstehenden Ansprüche,
dadurch gekennzeichnet,
daß als Additiv zur Verbesserung der Haftung auf anorganischen Gegenständen dem gelösten Polyurethanpolymer Silane, insbesondere Lactam-Silane, beigegeben werden.

10. Verfahren zum Behauten von Gegenständen nach einem der vorstehenden Ansprüche,
dadurch gekennzeichnet,
daß als Additive zur Farbgebung und/oder zum Lichtschutz organische Pigmente und Farbstoffe, Farbstoffe mit Perlglanzeffekt, fluoreszierende Farbstoffe und/oder Lebensmittelfarbstoffe dem gelösten Polyurethanpolymer beigegeben werden.

11. Verfahren zum Behauten von Gegenständen nach einem der vorstehenden Ansprüche,
dadurch gekennzeichnet,
daß vor der Behautung von unpolaren Polymeren, insbesondere von Polyethylenen, Toluol oder eine Mischung im Mischungsverhältnis von 1:1 aus zwei Anteilen aus der aus Toluol, Methyl-ethyl-keton, Tetrahydrofuran und Isopropanol bestehenden Gruppe auf dem Gegenstand aufgetragen wird.

12. Verfahren zum Behauten von Gegenständen nach einem der vorstehenden Ansprüche,
dadurch gekennzeichnet,
daß vor der Beschichtung der gelöste Polyurethanpolymeranteil bis zu 30 Masse-% beträgt, der Wasseranteil bis zu 10 Masse-% beträgt, der Anteil niedrigsiedender halogenfreier polarer organischer Lösungsmittel, wie z.B. Aceton, bis zu 50 Masse-% beträgt, der Anteil an Farbstoffen und/oder Pigmenten maximal 3 % beträgt, der Anteil an Flammhemmern vorzugsweise 4 %, der Anteil an Antioxidantien vorzugsweise 4 %, der Anteil an UV-Stabilisatoren vorzugsweise 4 % und der Anteil an Glanzbildnern maximal 3 % beträgt.

13. Verfahren zur Strukturierung einer Haut sowie zum Herstellen einer permeablen Membran, insbesondere nach einem der vorstehenden Ansprüche,
dadurch gekennzeichnet,
daß ein Gegenstand mit einer Haut aus Kunststoff, insbesondere mit einem Kunststoff, der einen hohen Polymeranteil aufweist dadurch behautet wird, daß der Gegenstand mit wenigstens einem in einem Lösungsmittel gelösten Polyurethanpolymer mit freien reaktiven Gruppen beschichtet wird und während, und vorzugsweise auch nach dem Beschichten eine chemische Reaktion, insbesondere eine Polymerisation des Polyurethanpolymers, in der auf den Gegenstand aufgebrachten Haut stattfindet und die Haut während oder nach dem Auftragen des gelösten Polyurethanpolymers mit einer nukleophilen Substanz, vorzugsweise mit Wasser, in Kontakt gebracht wird.

14. Verfahren nach Anspruch 13,
dadurch gekennzeichnet,
daß die Haut oder der behautete Gegenstand für eine bestimmte Zeit in eine nukleophile Substanz, insbesondere in Wasser, getaucht wird und/oder mit der nukleophilen Substanz besprüht wird.

15. Verfahren nach Anspruch 13 oder 14,
dadurch gekennzeichnet,
daß ein Gegenstand nach einem der vorstehenden Ansprüche behautet wird und die Haut nach wenigstens teilweisem Verfestigen von dem Gegenstand abgenommen, insbesondere von diesem abgezogen wird.

16. Verfahren nach einem der Ansprüche von 13 bis 15,
dadurch gekennzeichnet,
daß auf eine erste wenigstens teilweise verfestigte und strukturierte Haut eine oder mehrere weitere Häute aufgetragen und strukturiert werden und die Struktur aus mehreren Lagen insgesamt eine mehrlagige Haut bildet.

17. Behauteter Gegenstand,
gekennzeichnet durch eine Behautung nach einem der vorstehenden Ansprüche.

18. Behauteter Gegenstand nach Anspruch 17,
dadurch gekennzeichnet,
daß der behautete Gegenstand ein Lebensmittelbehälter, insbesondere ein Kunststoffhohlkörper oder eine Getränkeglasflasche aus farblosem Glas, ist.

19. Behauteter Gegenstand nach Anspruch 17,
dadurch gekennzeichnet,
daß der behautete Gegenstand ein Baukörper ist.

20. Behauteter Gegenstand nach Anspruch 17,
dadurch gekennzeichnet,
daß der behautete Gegenstand das Granulat, die Wand oder ein Teil eines Filters ist, der von einem zu reinigen Medium angeströmt oder durchströmt wird.

21. Behauteter Gegenstand nach Anspruch 17,
dadurch gekennzeichnet,
daß der behautete Gegenstand ein Metallkabel ist.
